# EUROPÄISCHE PATENTSCHRIFT

(11) **EP 0 878 043 B1**
(45) Veröffentlichungstag und Bekanntmachung des Hinweises auf die Patenterteilung: **15.12.1999**
(21) Anmeldenummer: 97914073.8
(22) Anmeldetag: 20.01.1997
(51) Int. Cl.: H02B 13/065, H01H 9/16

(54) **VERFAHREN ZUR STELLUNGSERFASSUNG EINES SCHALTGERÄTS**
METHOD OF DETERMINING THE POSITION OF A SWITCHING DEVICE
PROCEDE DE DETERMINATION DE LA POSITION D'UN APPAREIL DE COMMUTATION

(30) Priorität: 31.01.1996 DE 19603461
(43) Veröffentlichungstag der Anmeldung: 18.11.1998
(73) Patentinhaber: SIEMENS AKTIENGESELLSCHAFT, 80333 München (DE)
(72) Erfinder: BAUERSCHMIDT, Peter, D-91126 Schwabach (DE); BEIERL, Ottmar, D-91086 Aurachtal (DE); BULST, Wolf-Eckhart, D-81739 München (DE); MAGORI, Valentin, D-81539 München (DE); OSTERTAG, Thomas, D-85464 Finsing (DE); REINDL, Leonhard, D-83071 Stephanskirchen (DE); SCHOLL, Gerd, D-80636 München (DE); SCZESNY, Oliver, D-85609 Aschheim (DE); LORENZ, Dieter, D-12207 Berlin (DE)
(86) Internationale Anmeldenummer: DE9700093
(87) Internationale Veröffentlichungsnummer: WO9728590

(56) Entgegenhaltungen:
- EP-A- 0 298 069
- WO-A-93/13495
- DD-A- 269 040
- DE-C- 19 547 524
- DE-U- 9 420 199
- FR-A- 2 388 391
- US-A- 4 945 256

## Beschreibung

Die Erfindung betrifft ein Verfahren zur Stellungserfassung eines Schaltgeräts in einer gekapselten Schaltanlage sowie eine Schaltanlage mit einer Einrichtung hierzu.

Für Schaltanlagen in der Hoch- oder Mittelspannung besteht allgemein die Anforderung, daß für die verwendeten Schaltgeräte eine Stellungsanzeige vorhanden sein muß. Dies stellt in metallgekapselten Schaltanlagen ein Problem dar, da die Schaltstellung von außen nicht ersichtlich ist. Zum Erfassen einer Stellung müssen beispielsweise mechanische Mittel aus der Kapselung herausgeführt oder leitungsgebundene Erfassungsmittel mit Sensoren, insbesondere Kontakte, eingesetzt werden.

Derartige Mittel sind sehr aufwendig und zielen Jeweils nur auf die speziell zu erfassende Information ab. Zusätzlich müssen die Stellungsinformationen oft noch elektrisch umgesetzt und verarbeitet werden, wodurch ein Verdrahtungs- und Signalverarbeitungsaufwand gegeben ist.

Aus dem deutschen Gebrauchsmuster 94 20 199 ist eine metallgekapselte Hochspannunasschaltanlage bekannt, bei der in einem ihrer Gasräume ein Oberflächenwellenelement (OFW) angeordnet ist. Das OFW dient zum Nachweis von Gasanteilen, die durch Lichtbogeneinwirkung auf das in der Kapselung enthaltene Löschgas entstehen oder zur Detektion von Druckwellen. Dabei ist an der Außenseite der Kapselung eine Antenne angeordnet, die zur drahtlosen Informationsübertragung mit einer Auswerteeinrichtung dient.

Aus dem Aufsatz "Akustische Oberflächenwellen-Technologie für Innovationen" aus Siemens-Zeitschrift Spezial, FuE, Frühjahr 1994, ist prinzipiell die Anwendung von OFW-Sensoren in der Hochspannungstechnik bekannt. Dabei ist auch bereits vorgesehen, den OFW-Sensor im Behälter und seine Antenne außen zu befestigen.

Prinzipiell ist es aus dem Stand der Technik bekannt, die Schaltstellung eines Schaltgeräts mittels der sogenannten "Lichtschrankentechnik" zu ermitteln. Dabei wird eine Meßlichtstrahl gegebenenfalls von einem beweglichen Teil des Schaltgeräts unterbrochen, wovon ein Meldesignal abgekleitet wird. Hierzu wird beispielsweise auf die US-A-4,945,256 verwiesen.

In der FR-A-2 388 391 wird zur Stellungserfassung in einem gasisolierten Schaltgerät ein optisches Sendesignal in den Innenraum des Schaltgerätes gesendet. Ausgehend von einer Trennstellung des Schaltgeräts wird dieses optische Sendesignal vom Innenraum reflektiert. Das dabei erzeugte Reflexionssignal wird dann von einem getrennten Empfangssensor empfangen. In Abhängigkeit von dem Reflexionssignal wird dann eine entsprechende Stellungsmeldung erzeugt. Wird der Lichtweg durch ein bewegliches Teil des Schaltgeräts unterbrochen, so wird von dem Empfangselement ein neues Signal empfangen. In der Auswerteeinrichtung wird dann je nach empfangenen Lichtsignal ein entsprechendes Stellungssignal zugeordnet oder erzeugt.

Eine ähnliche Technik ist in der DD 269 040 A1 beschrieben. Dort wird ein optisches Sendesignal auf ein bewegliches Teil eines Schaltgeräts gerichtet. Je nach empfangenem Reflexionspegel wird von den jeweiligen empfangenen Signalen ein Stellungssignal für das Schaltgerät erzeugt. Sowohl in dieser Druckschrift als auch in der FR 2 388 391 wird das empfangene Reflexionssignal lediglich auf seinen Pegel überwacht und gegebenenfalls mit einem vorgegebenen Pegel, insbesondere einer Grenze, verglichen.

Der Erfindung liegt die Aufgabe zugrunde, eine einfache Lösung zur Stellungserfassung eines Schaltgeräts bei einer Schaltanlage anzugeben.

Die Lösung der Aufgabe gelingt erfindungsgemäß mit einem Verfahren zur Stellungserfassung eines Schaltgeräts in einer gekapselten Schaltanlage gemäß den Merkmalen des Patentanspruchs 1.

Auf diese Weise ist eine drahtlose Stellungserfassung möglich, die keine Erfassungsmittel oder Sensoren am Schaltgerät benötigt, wodurch auch kein Verdrahtungsaufwand oder aufwendige Potentialtrennmittel erforderlich sind.

Das Sendesignal ist ein elektromagnetisches Sendesignal. Damit ist eine Verwendung von Hochfrequenzsignalen möglich.

Es ist günstig, wenn die Schritte a) und b) für verschiedene Schaltzustände 3 oder Schaltstellungen des Schaltgeräts wiederholt werden und entsprechende erste Reflexionssignale gespeichert werden, und wobei ein im Schritt d) erfaßtes zweites Reflexionssignal mit den ersten gespeicherten Reflexionssignalen verglichen wird und entsprechend einer übereinstimmung mit einem der ersten Reflexionssignale ein entsprechendes Meldesignal für die jeweilige Schaltstellung erzeugt wird. Dadurch ist ein selektives Erfassen der jeweiligen Schaltzustände möglich. Jeder Schaltstellung ist quasi ein charakteristisches Echosignal im Sinne eines Abbildes zugeordnet, das ausgewertet wird.

Zusätzlich kann bei einer Abweichung des zweiten Reflexionssignals von einem der gespeicherten Signale ein Störsignal oder eine Störungsmeldung erzeugt werden. Auf diese Weise können auch nicht gespeicherte oder unklare Schaltstellungen oder gegebenenfalls unklare Signale ausgewertet werden.

Das Sendesignal kann mit Vorteil gleichzeitig als Aufrufsignal für zumindest einen Sensor, insbesondere einen Oberflächenwellensensor (OFW), dienen, wodurch eine günstige Kombination von mehreren Funktionen gegeben ist. Gegebenenfalls kann dabei dieselbe Hardware verwendet werden. Alternativ kann das Sendesignal auch als Signal für eine Informationsübertragung dienen. Damit ist gleichzeitig ein Datenverkehr mit einer gegebenenfalls entfernten Sendeempfangsstation möglich.

Es ist günstig, wenn ein Alarmsignal abgegeben wird, wenn mit der Erzeugung des Meldesignals ein Auslösesignal von einem Schutzgerät, z.B. einem Distanzschutz oder einem Sammelschienenschutz, für ein im Innenraum befindlichen Schaltanlagenteil oder das Schaltgerät abgegeben wird. Auf diese Weise können besondere kritische Betriebssituationen signalisiert werden, wobei gleichzeitig eine Kontrolle über die Richtigkeit oder die Funktion der Schutzauslösung möglich ist. Gegebenenfalls ist auch dabei eine gewichtete Entscheidung mit Hilfe eines Fuzzygliedes möglich.

Eine weitere erfindungsgemäße Lösung besteht in einer gekapselten Schaltanlage gemäß den Merkmalen des Patentanspruchs 9.

Die vorliegende neue Lösung erlaubt eine Stellungserfassung mit geringem Aufwand. In der Schaltanlage sind keine Sensoren, Kabel oder sonstige Erfassungsmittel nötig. Die Erfassung erfolgt von einer Stelle des Innenraums für die Kapselung. Selbstverständlich kann sinngemäß eine Vielzahl von Schaltgeräten innerhalb eines Innenraums überwacht werden.

Mit Vorteil ist die Sendeempfangseinrichtung gleichzeitig als Aufrufeinrichtung für einen Sensor, insbesondere einen Oberflächenwellensensor und/oder als Sendeempfangsstation für eine Informationsübertragung innerhalb der Kapselung ausgebildet. Hierdurch sind neue Mehrfachfunktionen gegeben, die einen verbesserten Betrieb der Schaltanlage erlauben.

Unter den Begriffen "Schaltgerät" und "gekapselte Schaltanlage" werden vorliegend jegliche elektrische Geräte oder Bauteile verstanden, die mechanisch schalt- oder veränderbar sind und die in einer Kapselung, einem Gehäuse oder Kessel untergebracht sind. Der Innenraum kann dabei mit einem Gas oder einem sonstigen Isoliermedium gefüllt sein. Beispiele hierzu sind: Ein gekapselter Trenn- oder Leistungsschalter, ein SF6-isolierter Transformator mit Stufenschalter, ein gekapseltes Schaltwerk oder eine in einem Kessel befindliche Verriegelungseinrichtung.

Ein Ausführungsbeispiel, weitere Vorteile und Details der Erfindung werden nachfolgend anhand der Zeichnung näher erläutert. Die FIG zeigt eine Schaltanlage in einem Längsschnitt.

Zunächst wird allgemein eine Schaltanlage mit einer Überwachungseinrichtung erläutert, wobei eine Informationsübertragung mit Hochfrequenz verwendet wird. Es versteht sich von selbst, daß die beschriebene Überwachungseinrichtung auch für andere Funktionen innerhalb der Schaltanlage, z.B. zur Erfassung einer Schaltstellung ohne Sensoren nach einem Radarprinzip, für zusätzliche Steuerungsaufgaben oder rein zur Informationsübertragung, verwendbar ist.

Die FIG zeigt eine gekapselte, gasisolierte Schaltanlage 1, wie sie beispielsweise aus dem Stand der Technik gemäß dem obengenannten Deutschen Gebrauchsmuster 94 20 199 bekannt ist. Die Schaltanlage 1 ist für Hoch- oder Mittelspannung geeignet. Unter Schaltanlage wird hier auch ein gekapselter Rohrleiter verstanden.

In diesem Längsschnitt durch einen Teil der Schaltanlage 1 ist ein Abzweig mit einem Schaltgerät 3, insbesondere einem Trenner oder einer Unterbrechereinheit, gezeigt. Zentral in der Kapselung 5 verläuft eine Stromschiene 6 als elektrischer Leiter. Zu näheren Details des Schaltgeräts 3 und dessen Funktion wird auf das obengenannte Gebrauchsmuster verwiesen.

Im Innenraum 4 der Kapselung 5 der Schaltanlage 1 sind als Sensoren Oberflächenwellensensoren (OFW) für verschiedenste Aufgaben, beispielsweise OFW 7a für eine Temperaturerfassung, OFW 7b für eine Stromerfassung, OFW 7c für eine Gaserkennung und OFW 7d für eine Stellungserkennung, angeordnet. Es sind dabei auch weitere OFWs für weitere Funktionen oder Aufgaben, z.B. Lichterkennung, Druckmessung usw., denkbar.

Jeder OFW weist als Empfangs- und Sendemittel zumindest eine Antenne 9 zur Informationsübertragung, insbesondere zur Abfrage, auf. Die Informationsübertragung erfolgt dabei von den OFWs 7a bis 7d zu einer zentralen, für alle OFWs 7a bis 7d wirksamen Sende- und Empfangsantenne, die nachfolgend als Antennenelement 11 bezeichnet ist .

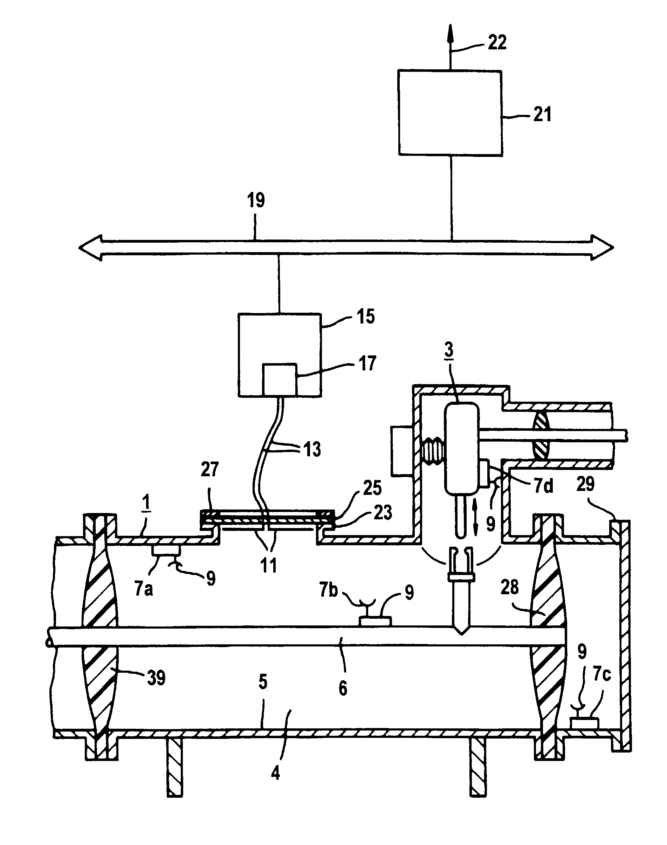

Unter Antenne, Sende- und Empfangsantenne, Antennenelement oder Empfangs- und Sendemittel werden hier jegliche Strahlung- und Empfangselemente verstanden, die eine Abstrahlung und/oder einen Empfang von elektromagnetischen Wellen ermöglichen, beispielsweise Funkantennen, Sende- und Empfangselemente, wobei auch eine Aufteilung in Sende- und Empfangseinrichtung umfaßt sein kann. Die Ausführung gemäß FIG 1 bezieht sich beispielhaft auf eine Funk-Informationsübertragung.

Das Antennenelement 11 ist über geeignete Leitungen 13, z.B. einem Koaxialkabel, gegebenenfalls unter Zwischenschaltung eines Anpaßgliedes, mit einer Steuer- und Überwachungseinrichtung (nachfolgend als Überwachungseinrichtung 15 bezeichnet) verbunden. Diese umfaßt ein Sende- und Empfangsteil 17 und eine weitere nicht näher gezeigte Einrichtung zur Signalauswertung, wobei gegebenenfalls ein Prozessor mit Speichereinrichtung umfaßt sein kann.

Das Sende- und Empfangsteil 17 oder zumindest Teile hiervon können prinzipiell auch dezentral bei dem Antennenelement 11 angeordnet sein, so daß zwischen der Überwachungseinrichtung 15 und dem Antennenelement 11 lediglich ein leistungsarmer Datenverkehr stattfindet. Die Sendeleistung wird dann dezentral erzeugt.

Es ist auch denkbar, daß das Antennenelement 11 mit einer dezentralen Einrichtung leitungsgebunden oder drahtlos direkt mit einem Bus 19 verbunden ist. Die Überwachungseinrichtung 15 kann mit dem Sende- und Empfangsteil 17 und dem angeschlossenen Antennenelement 11 im Sinne der vorliegenden Idee auch als Sendeempfangseinrichtung oder Transceiver bezeichnet werden.

Die Überwachungseinrichtung 15 kann beispielsweise eine zentrale Einheit in einer Schaltanlage oder auch eine abzweig- oder gerätebezogene Einrichtung sein, die über eine weitere Datenverbindung, z.B. über den Bus 19 mit einer übergeordneten Zentrale 21 datentechnisch in Verbindung steht. Diese Zentrale 21 kann eine Nahsteuerzentrale sein, welche wiederum über eine geeignete Schnittstelle 22 mit einer übergeordneten Netzleitstelle in Verbindung steht.

Selbstverstandlich umfaßt zumindest die Zentrale 21 geeignete Bedien- und Anzeigemittel, z.B. eine Tastatur und einen Bildschirm, für den Betrieb der Schaltanlage 1. Über geeignete nicht näher gezeigte Schnittstellen ist auch ein portables Gerät, z.B. ein tragbarer Computer oder ein Laptop, zur Bedienung oder für sonstige Ein- und Ausgaben an verschiedenste Stellen des in der Figur 1 gezeigten Systems, z.B. am Bus 19 oder an der Steuereinrichtung 15, anschließbar.

Die gezeigten Datenverbindungen können beliebig, z. B. als leitungsgebundene Verbindung, insbesondere Drahtleitung oder Lichtleiter, oder drahtlose Verbindung, z.B. Funk-, Schall- oder optische Verbindung, ausgeführt sein.

Im vorliegenden Beispiel ist das Antennenelement 11 innerhalb der Kapselung 5 an einer Öffnung angeordnet. Die Öffnung ist dabei von einem Flansch 23 gebildet, der mit einem Verschlußelement 25, z.B. einem Deckel und einem Druckring 27, verschlossen ist. Selbstverständlich sind hier nicht näher gezeigte Verschraubungen für die Flanschverbindung nach dem Stand der Technik vorzusehen.

Das Antennenelement 11 liegt somit innerhalb der Kapselung 5, so daß beste Bedingungen für eine problemlose Informationsübertragung zu den OFWs 7a bis 7d gegeben ist. Da das Antennenelement 11 quasi innerhalb eines Stutzens liegt und nicht in den Innenraum 4 hineinragt, sind hier elektrische oder feldtechnische Probleme vermieden. Außerdem bildet das Antennenelement 11 mit einem ohnehin von der Kapselung 5 lösbaren Bauteil eine Baueinheit, so daß es einfach zugänglich oder auch nachrüstbar ist.

Die OFWs 7a bis 7d sind dabei zum Teil an der Kapselung 5, zum Teil an der Stromschiene 6, auf einem beweglichen Teil des Schaltgeräts 3 oder auch an oder hinter einem ersten Stützer 28, gegebenenfalls in einem getrennten Gasraum, angeordnet. Gegebenenfalls können mehrere Sensoren für unterschiedliche Funktionen gesammelt an einem Ort angeordnet sein und eine gemeinsame Antenne aufweisen. Es ist auch möglich, daß ein Sensor mehrere Meßfunktionen beinhaltet. Vorteilhafterweise können die Sensoren nach Art und Größe einer Scheckkarte ausgebildet sein, wobei der wesentliche Teil der Karte die Antenne bildet.

Wesentlich für die Funktion der gesamten Überwachung ist, daß eine sichere Funk- oder Datenverbindung innerhalb der Kapselung 5 besteht. Dazu ist der Stützer 28 aus einem dielektrischen Material gefertigt, so daß die Hochfrequenzübertragung auch zwischen dem Antennenelement 11 und dem hinter dem Stützer 28 liegenden OFW 7c nicht beeinträchtigt ist.

Der Flansch 23 oder die benötigte Öffnung zur Einkopplung kann beispielsweise Teil einer vorhandenen Wartungsöffnung, eines Gasbefüllungsstutzens, einer Gießharzeinfüllöffnung, eines Schaulochs oder auch eines Endflansches sein. Sinngemäß sind daher die hier beispielhaft beschriebenen Ausführungen für jegliche mögliche Öffnungen an Schaltanlagen, beispielsweise auch für den gezeigten Endflansch 29, anwendbar. Es kann auch eine speziell angebrachte Öffnung verwendet werden.

Es ist auch denkbar, daß das Antennenelement 11 außerhalb der Kapselung 5 angeordnet ist und über ein dielektrisches Fenster in den Innenraum 4 strahlt. Hierzu bietet sich beispielsweise als Öffnung ein Einfüllstutzen im Bereich eines Verbindungsflansches zweier Kapselungsabschnitte an, wobei das Antennenelement gegebenenfalls als Stabantenne ausgebildet in die Öffnung eingegossen ist.

Bei Anordnung einer weiteren nicht näher gezeigten Antenne mit einer zugeordneten Steuereinrichtung im Gasraum hinter dem weiteren Stützer 39 ist auch eine Verwendung des Innenraumes 4 der Kapselung 5 als Übertragungsraum möglich, wobei eine geschützte Datenübertragung über lange Strecken möglich ist. Diese Möglichkeit ist bevorzugt bei Rohrleitern einsetzbar. Eine Kombination mit einer gleichzeitigen Sensorabfrage ist denkbar.

Die Sende- und Empfangsantenne 11 mit der Steuereinrichtung 15 und dem Sende- und Empfangsteil 17 können als Sendeempfangseinrichtung eine weitere oder alternative Funktion haben: Die Sendeempfangseinrichtung kann nämlich zur Stellungserfassung für das Schaltgerät 3 dienen. Das Erfassen der Stellung erfolgt folgendermaßen:

Zunächst wird von der Sende- und Empfangsantenne 11 ein erstes Sendesignal in den Innenraum 4 der Kapselung 5 gesendet. Dies kann ein spezielles Signal zur Stellungserfassung oder wie oben erwähnt das Aufrufsignal für einen Oberflächenwellensensor sein. Gegebenenfalls kann auf einer anderen Frequenz als auf der der OFWs 7a bis 7d gesendet werden, so daß eine bessere, selektive Erfassung möglich ist. Gegebenenfalls ist auch ein Multiplexbetrieb, also abwechselnd für jede Funktion, denkbar.

Das ausgestrahlte Sendesignal breitet sich im Innenraum 4 der Kapselung 5 aus, wird reflektiert und erzeugt an der Sende- und Empfangsantenne 11 ein erstes resultierendes Reflexionssignal, das empfangen und in der Sendeempfangseinrichtung gespeichert wird.

In einem nächsten Schritt wird ein zweites Sendesignal in den Innenraum 4 abgegeben und ein resultierendes zweites Reflexionssignal empfangen und gespeichert.

Nachfolgend werden dann die beiden Reflexionssignale miteinander verglichen. Liegt eine Abweichung vor, so kann davon ausgegangen werden, daß im Innenraum 4 eine mechanische Veränderung stattgefunden hat.

Da bei normalen Betriebsbedingungen eine mechanische Veränderung nur von einem mechanisch bewegten Teil, insbesondere dem Schaltgerät 3 herrühren kann, wird die Abweichung als Anzeichen für den Wechsel des Schaltzustandes oder der Schaltstellung des Schaltgeräts 3 herangezogen. Es wird dann ein entsprechendes Meldesignal für den neuen Schaltzustand erzeugt. Das Sendesignal kann dabei ein optisches, akustisches oder elektromagnetisches Sendesignal sein. Dies gilt selbstverständlich auch für die oben beschriebene Abfragetechnik der OFWs 7a bis 7d.

Bei der Auswertung des Reflexionssignals braucht gegebenenfalls nur ein Frequenzausschnitt, ein Zeitausschnitt oder ein bestimmtes Frequenzspektrum gespeichert und verglichen zu werden, die für den jeweiligen Innenraum 4 charakteristisch ist.

Bei einer Vielzahl von möglichen Schaltzuständen oder bei der Anordnung von mehreren Schaltgeraten innerhalb eines Innenraumes kann es zweckmäßig sein, daß die maximale Anzahl von mechanischen Schaltzuständen quasi als Fingerprint, Echomuster oder Signalmuster (jeweils zugeordnete Reflexionssignale aller Kombinationsmöglichkeiten von Schaltzuständen) in einem Speicher der Steuereinrichtung 15 abgelegt sind. Durch Vergleich des aktuell ermittelten zweiten Reflexionssignals mit den abgespeicherten kann die jeweilige Schaltstellung oder der Anlagenzustand ermittelt werden, ohne daß die Anlage innerhalb der Kapselung 4 mechanisch oder optisch zugänglich ist. Es wird in diesem Fall lediglich ein Einbauort für die Sende- und Empfangsantenne 11 benötigt. Es ist gegebenenfalls auch denkbar, daß eine zweiteilige Sende- und Empfangsantenne oder eine zusätzliche Empfangsantenne vorgesehen ist, so daß eine verbesserte Auswertung des Reflexionssignals und/oder des Antwcrtsignals möglich ist.

Gegebenenfalls kann auch ein für einen bestimmten Schaltzustand abgespeichertes Muster oder Reflexionssignal als Referenzsignal zur Beurteilung weiterer empfangenen Reflexionssignale dienen. Liegt eine Abweichung zwischen dem zweiten empfangenen Reflexionssignal und den gespeicherten ersten Reflexionssignalen vor (also keine Übereinstimmung), so liegt offenbar ein Anlagenzustand vor, der nicht einem definierten Schaltzustand entspricht-. In dieser Situation wird ein Störsignal oder eine Störungsmeldung erzeugt.

Desweiteren kann ein Alarmsignal erzeugt werden, wenn mit der Erzeugung eines Meldesignals durch die beschriebene Einrichtung gleichzeitig von einem Schutzgerät der Anlage, das für den betroffenen Schaltanlagenteil zuständig ist, ein Auslösesignal abgegeben wird. In diesem Fall kann davon ausgegangen werden, daß ein Zusammenhang zwischen der mechanischen Veränderung und einem elektrischen Fehler vorliegt.

Gegebenenfalls liegt sogar eine Störung innerhalb der Kapselung vor, die eine Abschaltung zumindest eines Teils der Schaltanlage erfordert. Die erzeugten Melde-, Alarm und Störsignale können dann gegebenenfalls die Abschaltung der Schaltanlage bewirken. Weitere logische Verknüpfungen von Signalen zur Erhöhung der Betriebssicherheit oder zur Fehlerdiagnose oder -lokalisierung sind möglich und denkbar. Darüber hinaus kann auf diese Weise eine erfolgreiche Schutzauslösung kontrolliert werden. Es kann also eine Verknüpfung oder Einbindung in ein gesamtes Schutzkonzept erfolgen. Zusätzlich ist auch eine Auswertung der erzeugten Signale nach gewichteten Kriterien möglich, so daß auch bei ungünstigen Betriebsbedingungen eine frühzeitige Fehlererkennung möglich ist. Eine selbstlernende oder neuronale Verfahrensweise ist ebenfalls denkbar.

Selbstverständlich sind die obengenannten einzelnen Merkmale und Ausführungen der vorliegenden neuen Idee im Rahmen des fachmännischen Handels miteinander oder mit Merkmalen aus dem Stand der Technik kombinierbar, ohne daß der Grundgedanke der Idee verlassen wird. Mit der erläuterten Anordnung ist eine Vielzahl von Schaltgeräten innerhalb eines Innenraums überwachbar. Wesentlich für die neue Idee ist, daß eine zentrale drahtlose Überwachung von mechanischen Zuständen ohne zusätzliche Sensoren erfolgt, wobei insbesondere eine Kombination mit einer drahtlosen Sensorabfrage für weitere Informationen möglich ist. Dabei wird für beide Funktionen nur eine Antenne und gegebenenfalls nur eine Durchführung an der Kapselung benötigt.

## Patentansprüche

1. Verfahren zur Stellungserfassung zumindest eines Schaltgeräts (3) in einer gekapselten Schaltanlage (1),
a) wobei ausgehend von einer ersten Schaltstellung des Schaltgeräts (3) mittels einer Funkantenne (11) ein als Funksignal ausgebildetes erstes Sendesignal in den Innenraum (4) der Kapselung (5) gesendet wird,
b) wobei das erste Sendesignal vom Innenraum (4) und von dem Schaltgerät (3) reflektiert und dabei ein erstes resultierendes Reflexionssignal im Sinne eines Abbilds des Innenraums (4) erzeugt wird,
c) wobei das erste resultierende Reflexionssignal von der Funkantenne (11) empfangen und dann gespeichert wird,
d) wobei ein als Funksignal ausgebildetes zweites Sendesignal in den Innenraum (4) der Kapselung (5) gesendet wird und ein zweites resultierendes Reflexionssignal empfangen und gegebenenfalls gespeichert wird,
e) und bei einer Abweichung der beiden Reflexionssignale voneinander ein Meldesignal für die neue Schaltstellung des Schaltgeräts (3) erzeugt wird.

2. Verfahren nach Anspruch 1, wobei das Sendesignal ein elektromagnetisches Hochfrequenzsignal ist.

3. Verfahren nach Anspruch 1 oder 2, wobei die Schritte a), b) und c) für verschiedene Schaltstellungen des Schaltgeräts (3) wiederholt werden und entsprechende erste Reflexionssignale gespeichert werden, und wobei ein im Schritt d) erfaßtes zweites Reflexionssignal mit den ersten gespeicherten Reflexionssignalen verglichen wird und bei einer Übereinstimmung mit einem der gespeicherten Reflexionssignale ein entsprechendes Meldesignal für die jeweilig eingenommene Schaltstellung erzeugt wird.

4. Verfahren nach Anspruch 3, wobei bei einer Abweichung des zweiten Reflexionssignals von den ersten gespeicherten Reflekionssignalen ein Störsignal erzeugt wird.

5. Verfahren nach einem der vorhergehenden Ansprüche, wobei das Sendesignal gleichzeitig als Aufrufsignal für zumindest einen drahtlos abfragbaren Sensor dient.

6. Verfahren nach Anspruch 5, wobei als Sensor ein Oberflächenwellensensor (7a bis 7d) dient.

7. Verfahren nach einem der Ansprüche 1 bis 4, wobei das Sendesignal gleichzeitig als Signal für eine Informationsübertragung dient.

8. Verfahren nach einem der Ansprüche 1 bis 7, wobei ein Alarmsignal abgegeben wird, wenn mit der Erzeugung des Meldesignals ein Auslösesignal von einem Schutzgerät für den betreffenden Schaltanlagenteil oder das Schaltgerät (3) abgegeben wird.

9. Gekapselte Schaltanlage mit zumindest einem in einem Innenraum (4) der Kapselung (5) angeordneten Schaltgerät (3), und mit einer Einrichtung zur Stellungserfassung, die eine auf den Innenraum (4) gerichtete Sendeempfangseinrichtung (11) umfaßt, welche als Funkantenne ausgebildet ist,
- wobei ausgehend von einer ersten Schaltstellung des Schaltgerätes (3) die Sendeempfangseinrichtung (11) ein als Funksignal ausgebildetes erstes Sendesignal in den Innenraum (4) abgibt und ein vom Inneraum (4) und vom Schaltgerät (3) erzeugtes, resultierendes, im Sinne eines Abbilds des Innenraums (4) dienendes erstes Reflexionssignal empfängt und speichert,
- wobei die Sendeempfangseinrichtung (11) ein als Funksignal ausgebildetes zweites Sendesignal in den innenraum abgibt und ein vom Innenraum (4) und vom Schaltgerät (3) erzeugtes, zweites Reflexionssignal empfängt und gegebenenfalls speichert, und
- wobei die beiden Reflexionssignale einer Vergleichseinrichtung zugeführt sind, welche ein Meldesignal für einen neuen Schaltzustand erzeugt, wenn eine Abweichtung zwischen den beiden Reflexionssignalen vorliegt.

10. Gekapselte Schaltanlage nach Anspruch 9, wobei die Sendeempfangseinrichtung gleichzeitig als Aufrufeinrichtung für einen Sensor, insbesondere einen Oberflächenwellensensor (7a bis 7d), und/oder als Sendeempfangesstation für eine Informationsübertragung innerhalb der Kapselung ausgebildet ist.

## Claims

1. Method for detecting the position of at least one switching device (3) in an encapsulated switching installation (1),
a) a first transmitted signal, in the form of a radio signal, being transmitted into the interior (4) of the encapsulation (5) by means of a radio antenna (11), on the basis of a first switch position of the switching device (3),
b) the first transmitted signal being reflected from the interior (4) and from the switching device (3) and, at the same time, a first resultant reflection signal being produced in the sense of an image of the interior (4),
c) the first resultant reflection signal being received by the radio antenna (11), and then being stored,
d) a second transmitted signal, in the form of a radio signal, being transmitted into the interior (4) of the encapsulation (5), and a second resultant reflection signal being received and likewise being stored,
e) and, in the event of any discrepancy between the two reflection signals, a message signal being produced for the new switch position of the switching device (3).

2. Method according to Claim 1, the transmitted signal being an electromagnetic radio-frequency signal.

3. Method according to Claim 1 or 2, steps a), b) and c) being repeated for different switch positions of the switching device (3) and corresponding first reflection signals being stored, a second reflection signal which is detected in step d) being compared with the first, stored reflection signals, and a corresponding message signal for the respectively assumed switch position being produced in the event of correspondence with one of the stored reflection signals.

4. Method according to Claim 3, a disturbance signal being produced in the event of any discrepancy between the second reflection signal and the first, stored reflection signals.

5. Method according to one of the preceding claims, the transmitted signal at the same time being used as a call-up signal for at least one sensor which can be interrogated without using wires.

6. Method according to Claim 5, a surface acoustic wave sensor (7a to 7d) being used as the sensor.

7. Method according to one of Claims 1 to 4, the transmitted signal at the same time being used as a signal for information transmission.

8. Method according to one of Claims 1 to 7, an alarm signal being emitted if, with the production of the message signal, a tripping signal is emitted by a protective device for the relevant switching installation part or the switching device (3).

9. Encapsulated switching installation having at least one switching device (3), which is arranged in the interior (4) of the encapsulation (5), and having a device for position detection, which device comprises a transmitting/receiving device (11) which is directed towards the interior (4), and is in the form of a radio antenna,
- the transmitting/receiving device (11) emitting a first transmitted signal, in the form of a radio signal, into the interior (4), based on a first switch position of the switching device (3), and receiving and storing a first resultant reflection signal which is produced from the interior (4) and from the switching device (3) and is used in the sense of an image of the interior (4),
- the transmitting/receiving device (11) emitting a second transmitted signal in the form of a radio signal into the interior and receiving, and possibly storing, a second reflection signal which is produced from the interior (4) and from the switching device (3), and
- the two reflection signals being supplied to a comparison device which produces a message signal for a new switching state if there is any discrepancy between the two reflection signals.

10. Encapsulated switching installation according to Claim 9, the transmitting/receiving device at the same time being designed as a call-up device for a sensor, in particular a surface acoustic wave sensor (7a to 7d), and/or as a transmitting/receiving station for information transmission within the encapsulation.

## Revendications

1. Procédé pour la détection de position d'au moins un appareil de commutation (3) dans une installation de distribution blindée (1), dans lequel
a) à partir d'une première position de commutation de l'appareil de commutation (3) et au moyen d'une antenne radio (11), un premier signal émis conçu comme un signal radio est envoyé dans l'espace intérieur (4) du blindage (5),
b) le premier signal émis est réfléchi par l'espace intérieur (4) et par l'appareil de commutation (3) et un premier signal réfléchi résultant est produit comme étant une image de l'espace intérieur (4),
c) le premier signal réfléchi résultant est reçu par l'antenne radio (11) et ensuite mémorisé,
d) un deuxième signal émis conçu comme un signal radio est envoyé dans l'espace intérieur (4) du blindage (5) et un deuxième signal réfléchi résultant est reçu et éventuellement mémorisé,
e) dans le cas d'une différence entre les deux signaux réfléchis, un signal d'état pour la nouvelle position de commutation de l'appareil de commutation (3) est produit.

2. Procédé selon la revendication 1, dans lequel le signal émis est un signal électromagnétique à haute fréquence.

3. Procédé selon la revendication 1 ou 2, dans lequel les étapes a), b) et c) sont répétées pour différentes positions de commutation de l'appareil de commutation (3) et des premiers signaux réfléchis correspondants sont mémorisés et dans lequel un deuxième signal réfléchi détecté à l'étape d) est comparé aux premiers signaux réfléchis mémorisés et, dans le cas d'une coïncidence avec l'un des signaux réfléchis mémorisés, un signal d'état correspondant pour la position de commutation respectivement prise est produit.

4. Procédé selon la revendication 3, dans lequel, dans le cas d'une différence entre le deuxième signal réfléchi et les premiers signaux réfléchis mémorisés, un signal de perturbation est produit.

5. Procédé selon l'une des revendications précédentes, dans lequel le signal émis sert en même temps de signal d'appel pour au moins un capteur interrogeable sans fil.

6. Procédé selon la revendication 5, dans lequel un capteur d'ondes de surface (7a à 7d) sert de capteur.

7. Procédé selon l'une des revendications 1 à 4, dans lequel le signal émis sert en même temps de signal pour une transmission d'informations.

8. Procédé selon l'une des revendications 1 à 7, dans lequel un signal d'alarme est délivré lorsque, conjointement à la production du signal d'état, un signal de déclenchement est délivré par un appareil de protection pour la partie d'installation de distribution considérée ou pour l'appareil de commutation (3).

9. Installation de distribution blindée comportant au moins un appareil de commutation (3) agencé dans un espace intérieur (4) du blindage (5) et comportant un dispositif qui est destiné à la détection de position et qui comprend un dispositif d'émission et de réception (11) qui est dirigé sur l'espace intérieur (4) et qui est conçu comme une antenne radio,
dans laquelle
- à partir d'une première position de commutation de l'appareil de commutation (3), le dispositif d'émission et de réception (11) délivre un premier signal émis, conçu comme un signal radio, dans l'espace intérieur (4) et un premier signal réfléchi, produit par l'espace intérieur (4) et par l'appareil de commutation (3), résultant et servant comme une image de l'espace intérieur (4), est reçu et mémorisé,
- le dispositif d'émission et de réception (11) délivre un deuxième signal émis, conçu comme un signal radio, dans l'espace intérieur (4) et un deuxième signal réfléchi, produit par l'espace intérieur (4) et par l'appareil de commutation (3), est reçu et éventuellement mémorisé, et
- les deux signaux réfléchis sont envoyés à un dispositif comparateur qui produit un signal d'état pour un nouvel état de commutation lorsqu'il y a une différence entre les deux signaux réfléchis.

10. Installation de distribution blindée selon la revendication 9, dans laquelle le dispositif d'émission et de réception est conçu en même temps comme un dispositif d'appel pour un capteur, notamment pour un capteur d'ondes de surface (7a à 7d), et/ou comme une station d'émission et de réception pour une transmission d'informations à l'intérieur du blindage.
